# FASCICULE DE BREVET EUROPEEN

(11) **EP 4 089 404 B1**
(45) Date de publication et mention de la délivrance du brevet: **25.03.2026**
(21) Numéro de dépôt: 22172746.4
(22) Date de dépôt: 11.05.2022
(51) Int. Cl.: G01N 21/954, G06T 7/00

(54) **SYSTÈME D'IDENTIFICATION DE DÉFAUT DANS UNE CANALISATION**
SYSTEM ZU IDENTIFIZIERUNG VON FEHLERN IN EINER ABWASSERLEITUNG
SYSTEM FOR IDENTIFYING A FAULT IN A PIPELINE

(30) Priorité: 12.05.2021 FR 2105052
(43) Date de publication de la demande: 16.11.2022
(73) Titulaire: Veolia Environnement, 75008 Paris (FR)
(72) Inventeur: GAUDICHET-MAURIN, Emmanuelle, 92600 ASNIERES SUR SEINE (FR); CHENU, Damien, 92600 ASNIERES SUR SEINE (FR); LACHAIZE, Marie, 78210 SAINT CYR L'ECOLE (FR); RODRIGUES SAMPAIO, Philippe, 78600 MAISONS LAFFITTE (FR); BERNARD, Marine, 75008 PARIS (FR); MAITROT, Aude, 92000 NANTERRE (FR)
(74) Mandataire: Cabinet Beau de Loménie

(56) Documents cités:
- WO-A1-2019/094571
- US-A1- 2014 168 408
- US-A1- 2021 082 098
- US-B2- 7 215 811
- GUO W ET AL: "Automated defect detection for sewer pipeline inspection and condition assessment", AUTOMATION IN CONSTRUCTION, ELSEVIER, AMSTERDAM, NL, vol. 18, no. 5, 1 August 2009 (2009-08-01), pages 587 - 596, XP026826175, ISSN: 0926-5805, [retrieved on 20090121]

## Description

### Domaine Technique

Le présent exposé concerne un système d'identification de défaut dans une canalisation permettant de faciliter la détermination du type des défauts présents dans une telle canalisation. Il concerne également un procédé d'entraînement d'un modèle d'apprentissage statistique destiné à un tel usage ainsi qu'un procédé d'identification de défaut dans une canalisation.

Un tel système d'identification peut notamment être utilisé dans le cadre de la maintenance d'un réseau de canalisations non visitables, typiquement d'eaux usées, afin d'évaluer l'état de santé des canalisations, d'améliorer la précision de l'identification des défauts et de faciliter la rédaction d'un rapport d'inspection.

### Technique antérieure

Les réseaux de canalisations enterrées, et notamment d'eaux usées, font l'objet d'inspections régulières destinées à identifier les éventuels défauts présents dans la canalisation en vue de planifier une éventuelle maintenance de tout ou partie du réseau.

La plupart des canalisations de ces réseaux étant non visitables, c'est-à-dire trop petites pour qu'un opérateur ne puisse pénétrer dans la canalisation, il est habituel d'utiliser un robot muni d'une caméra pour parcourir les canalisations à la recherche de défauts. Un opérateur contrôle alors le déplacement du robot et visualise le flux vidéo transmis par la caméra du robot afin de repérer d'éventuels défauts en temps réel. Lorsqu'un défaut est repéré, l'opérateur est chargé de prendre une photographie de la portion de canalisation impactée par le défaut et de déterminer le type de défaut parmi les types d'une classification définie par la norme NF-13508-2 : l'opérateur dresse ainsi au fur et à mesure des découvertes de défauts un rapport d'inspection associant les photographies des défauts avec leur classification.

Toutefois, cette norme comporte un grand nombre de catégories de défauts (une trentaine) ainsi qu'un nombre encore plus important de sous-catégories (plusieurs centaines). Le travail de classification est donc particulièrement exigeant et requiert des opérateurs bénéficiant d'une compétence et d'un savoir-faire important. Il est également fastidieux puisque l'opérateur doit se référer à cette norme et à sa codification pour chacun des défauts rencontrés. Par ailleurs, ce travail d'identification manuel est sensible à la subjectivité de l'opérateur et à de possibles biais cognitifs.

Des tentatives d'identification automatique des défauts ont alors été proposées. Toutefois, à ce jour, ces tentatives sont essentiellement académiques et ne correspondent pas à la réalité du terrain. En particulier, la plupart des solutions proposées à ce jour se concentrent sur la caractérisation d'un type de défaut précis, par exemple les fissures, mais sont incapables d'identifier d'autres types de défaut, tels que la présence d'un dépôt ou de racines par exemple. Les documents Guo W et AI « Automated defect detection for sewer pipeline inspection and condition assessment », US 2021/082098 et US 2014/168408 décrivent des exemples de procédé de détection et d'identification de défauts.

Certaines solutions plus généralistes existent mais elles se limitent néanmoins à un nombre réduit de types de défaut, rarement plus que quelques unités, et n'offrent donc pas une précision suffisante pour satisfaire le niveau de précision requis par ces rapports d'inspection. De plus, la plupart des solutions proposées à ce jour se limitent à la classification d'un défaut unique et sont incapables, en particulier, de classifier simultanément plusieurs défauts lorsque plusieurs défauts sont présents sur une même photographie, ce qui arrive fréquemment en pratique, certains défauts pouvant favoriser l'apparition d'un deuxième défaut d'un autre type.

De plus, la plupart des solutions existantes proposent d'utiliser des caméras spéciales, de type fish-eye notamment, afin de réaliser une reconstitution 3D de la canalisation, en incluant ses défauts. Toutefois, ces solutions ne sont pas privilégiées car elles nécessitent d'investir dans un matériel spécifique et de former les opérateurs à une toute autre manière de travailler. Elles engendrent de plus des déformations significatives des images.

Il existe donc un réel besoin pour un système d'identification de défaut dans une canalisation qui soit dépourvu, au moins en partie, des inconvénients inhérents aux solutions connues précitées.

### Exposé de l'invention

La présente invention concerne un système d'identification de défaut dans une canalisation selon la revendication 1..

Grâce à un tel modèle d'apprentissage statistique, il est possible de déterminer le type des défauts présents sur les photographies ou au moins de disposer d'une estimation suffisamment précise de la probabilité de présence de chaque défaut pour fournir à l'opérateur une aide à la décision dans l'identification de chaque défaut, par exemple sous la forme d'une proposition de classification. La réalisation des rapports d'inspection est ainsi facilitée. La précision et la rigueur des rapports d'inspection sont également améliorées.

En particulier, puisque le modèle d'apprentissage statistique est entraîné pour reconnaître un grand nombre de types de défaut différents, la conformité à la norme NF-13508-2, lorsqu'elle est recherchée, est plus facile à obtenir sans effort significatif supplémentaire de la part de l'opérateur. Le modèle d'apprentissage statistique étant en outre capable de déterminer en simultané le type de plusieurs défauts présents sur une même photographie, l'opérateur n'est pas contraint de passer du temps à tenter d'isoler chaque défaut sur une photographie distincte : l'inspection est ainsi plus rapide et le rapport d'inspection plus court, une seule photographie pouvant décrire plusieurs défauts.

De plus, un tel système d'identification se base sur l'opération d'inspection classique telle qu'elle est menée à ce jour, avec l'utilisation d'un robot parcourant la canalisation à la recherche de défaut, la prise des photographies des portions de canalisation présentant ces défauts, et la détermination du type de défaut sur la base de cette photographie. La transition de l'opération classique à cette opération assistée par le modèle d'apprentissage statistique est donc aisée : en particulier, les robots antérieurs peuvent être utilisés et la formation additionnelle des opérateurs est limitée à celle de la manipulation des résultats du modèle d'apprentissage statistique.

En particulier, comme dans l'opération d'inspection classique, la détermination s'effectue sur la base de photographies unitaires, et non sur la base d'une vidéo ou d'une série temporelles et/ou spatiales de photographies du même défaut. Ceci permet en particulier de se placer dans les mêmes conditions opérationnelles que les inspections passées et donc de mettre à profit lors de l'entraînement du modèle d'apprentissage statistique l'importante base de données photographiques des inspections passées dont dispose l'exploitant, assurant ainsi une fiabilité satisfaisante du modèle d'apprentissage statistique dès sa première utilisation.

Dans certains modes de réalisation, la canalisation est une canalisation non visitable, possédant un diamètre nominal inférieur à 1600 mm, de préférence compris entre 200 et 500 mm.

Dans certains modes de réalisation, la canalisation est une canalisation d'eaux usées.

Dans certains modes de réalisation, la liste préétablie comprend au moins 15 types de défauts, de préférence au moins 20 types de défauts, de préférence encore au moins 30 types de défauts. Plus le modèle d'apprentissage statistique est capable d'identifier des types de défauts différents, plus le travail résiduel de l'opérateur est réduit, notamment lorsqu'il est nécessaire de se conformer à la codification de la norme.

Dans certains modes de réalisation, tous les types de défauts de la liste préétablie font partie des types de défauts décrits par la norme NF-13508-2.

Dans certains modes de réalisation, la liste préétablie comprend au moins les types de défauts suivants : fissure (BAB) ; dégradation de surface (BAF) ; raccordement défectueux (BAH) ; sol visible (BAO) ; dépôts et dépôts adhérents (BBC+BBB) ; rupture/effondrement (BAC) ; branchement pénétrant (BAG) ; déplacement de conduites (BAJ) ; racines (BBA) ; et raccordement (BCA). Les trigrammes entre parenthèses correspondent aux codifications de la norme NF-13508-2.

Dans certains modes de réalisation, chaque photographie comprend au moins un défaut. Ceci facilite le travail de détermination du modèle d'apprentissage statistique qui peut partir de l'hypothèse qu'au moins un défaut est présent : le modèle d'apprentissage statistique peut ainsi se concentrer sur la détermination du type des défauts, ce qui renforce sa précision dans cette tâche. En particulier, le modèle d'apprentissage statistique peut être entraîné dans ce but sur une base de données contenant exclusivement des photographies présentant au moins un défaut.

Dans certains modes de réalisation, au moins certaines photographies comprennent plusieurs défauts.

Le robot est configuré pour être piloté par un opérateur. Toutefois, dans d'autres aspects non couverts par les revendications, le robot pourrait être configuré pour parcourir la canalisation de manière autonome.

Dans certains modes de réalisation, la caméra du robot est orientable. Elle est de préférence orientée par l'opérateur. Dans le cadre d'un pilotage autonome du robot non couvert par les revendications, elle pourrait être orientée de manière autonome.

Dans certains modes de réalisation, la caméra du robot est une caméra RVB. Il s'agit donc d'une caméra classique telle qu'il en existe déjà sur ce type de robot.

Dans certains modes de réalisation, la caméra du robot est munie d'un objectif ayant une distance focale supérieure ou égale à 20 mm, de préférence supérieure ou égale à 25 mm, de préférence encore supérieure ou égale à 30 mm. Il s'agit donc d'une caméra classique telle qu'il en existe déjà sur ce type de robot. En particulier, la caméra du robot n'est pas munie d'un objectif fish-eye. De cette manière, les photographies prises par la caméra ne présentent pas de distorsion notable, ce qui facilite le travail de reconnaissance d'un éventuel opérateur. De plus, on évite de perturber la reconnaissance d'image par le modèle d'apprentissage statistique si son apprentissage a été réalisé sur des photographies sans déformations.

Les photographies sont déclenchées manuellement par un opérateur.

Dans certains modes de réalisation, le système de traitement comprend un module de détection automatique de défauts configuré pour détecter au moins certains types de défauts sur la base du flux vidéo de la caméra du robot. Un tel module de détection automatique est tout particulièrement intéressant dans le cadre d'un pilotage autonome du robot : le parcours de la canalisation, la détection des défauts, l'orientation de la caméra et la prise des photographies pertinentes peuvent ainsi se faire de manière autonome, sans intervention de l'opérateur. Dans ce cas, ce module de détection automatique de défauts est de préférence distinct du modèle d'apprentissage statistique.

Le système de traitement est configuré pour recevoir sans délai les photographies prises par le robot et les transmettre sans délai au modèle d'apprentissage statistique pour la détermination des types de défauts. Autrement dit, la détermination des défauts se fait sur le moment, au fur et à mesure du repérage des défauts dans la canalisation.

Dans d'autres aspects non couverts par les revendications, la détermination peut se faire en différé, sur la base de l'ensemble des photographies enregistrées durant le parcours du tronçon.

Dans certains modes de réalisation, le système d'identification comprend en outre une base de données de photographies comprenant au moins 1 000, de préférence au moins 100 000, de préférence encore au moins 1 000 000, photographies de portions de canalisation présentant au moins un défaut, chaque photographie étant associée avec le type de chacun des défauts visibles sur la photographie. Plus cette base de données est importante, plus l'entraînement du modèle d'apprentissage statistique sera poussé et donc plus ce dernier sera précis. De plus, comme mentionné plus haut, il est préférable de n'inclure que des photographies présentant au moins un défaut afin de spécialiser le modèle d'apprentissage statistique dans la classification des défauts plutôt que dans leur simple détection.

Dans certains modes de réalisation, le modèle d'apprentissage statistique a été entraîné sur ladite base de données.

Dans certains modes de réalisation, le modèle d'apprentissage statistique est un classifieur multi-labels. Contrairement à un classifieur multi-classes qui prévoit des classes multiples mais exclusives les unes des autres, un classifieur multi-labels prévoit des classes multiples et non exclusives les unes des autres : autrement dit, sur la base d'une photographie donnée, un tel classifieur multi-labels est capable de déterminer le type de plusieurs défauts appartenant à des classes différentes.

Dans certains modes de réalisation, le modèle d'apprentissage statistique comprend au moins un réseau de neurones, de préférence du type convolutif profond.

Dans certains modes de réalisation, le modèle d'apprentissage statistique comprend un réseau de neurones hybride, assemblant des architectures convolutive et récurrente. Une telle architecture hybride permet notamment de tirer profit de corrélations qui peuvent exister entre certains types de défauts, certains défauts pouvant favoriser l'apparition d'un deuxième défaut d'un autre type.

Dans certains modes de réalisation, le modèle d'apprentissage statistique comprend plusieurs classifieurs entraînés sur des bases de données différentes. Il est ainsi possible de combiner les prédictions de ces modèles afin d'améliorer la performance et la robustesse des prédictions.

Dans certains modes de réalisation, le modèle d'apprentissage est configuré pour déterminer une probabilité de présence pour chacun des types de défauts de la liste préétablie.

Dans certains modes de réalisation, le modèle d'apprentissage est configuré pour déterminer qu'un type de défaut particulier est présent s'il détermine que la probabilité de présence de ce type de défaut est supérieure à un seuil prédéterminé. Le réglage de ce seuil permet de trouver un compromis entre la suggestion d'un grand nombre de défauts, au risque de générer un nombre important de faux positifs que l'opérateur devra corriger manuellement au détriment de la rapidité de l'inspection, et la suggestion d'un nombre plus réduit de défauts, avec une probabilité de faux positifs plus faible mais un risque plus important de faux négatifs et donc au détriment de la qualité de l'inspection.

Dans certains modes de réalisation, chaque type de défaut est associé à un seuil personnalisé. En effet, il peut être intéressant de proposer à l'opérateur une plus grande proportion de faux positifs pour certains types de défaut qui sont fréquemment omis par les opérateurs ou qui sont critiques pour l'exploitation et une plus grande proportion de faux négatifs pour d'autres types de défaut que l'opérateur pourra facilement détecter et corriger par lui-même.

Selon l'invention, le système d'identification comprend une interface homme-machine comportant au moins un écran, le système de traitement étant configuré pour afficher sur l'écran la photographie en cours accompagnée d'une proposition de classification pour chacun des défauts reconnaissables sur la photographie. Le système d'identification fournit ainsi une aide à la décision à l'opérateur qui reste maître de la classification finale. On accélère ainsi le travail d'inspection tout en assurant un très haut niveau de fiabilité, les éventuelles erreurs de détermination du modèle d'apprentissage statistique pouvant être corrigées par l'opérateur.

Dans certains modes de réalisation, le système de traitement est configuré pour afficher en outre en surimpression sur la photographie la position des défauts reconnus. L'implémentation d'un algorithme permettant de visualiser les cartes d'activation est un moyen de fournir un indice sur la position des défauts dans l'image, en mettant en évidence les zones de l'image susceptibles de contenir les défauts.

Dans certains modes de réalisation, le système de traitement est configuré pour recevoir une confirmation ou une correction de la proposition, saisie par un opérateur par l'intermédiaire de l'interface homme-machine, et à enregistrer la classification définitive pour chacun des défauts de la photographie. La correction peut comprendre la correction du type proposé pour un défaut donné et/ou l'ajout d'un défaut supplémentaire non reconnu par le modèle d'apprentissage statistique avec sa classification telle que déterminée par l'opérateur.

Dans certains modes de réalisation, le système de traitement est configuré pour transmettre la photographie et la classification de chacun des défauts de la photographie à un logiciel de rédaction de rapport.

Dans certains modes de réalisation, le système de traitement est configuré pour ajouter chaque nouvelle photographie à la base de données, en association avec la classification définitive des défauts. Cet ajout est de préférence réalisé après validation ou correction par l'opérateur. Ceci permet d'enrichir la base de données à chaque nouvelle inspection.

Dans certains modes de réalisation, le système de traitement est configuré pour évaluer le modèle d'apprentissage statistique en fonction des confirmations ou corrections saisies par l'opérateur.

Dans certains modes de réalisation, le système de traitement est configuré pour ajuster le paramétrage du modèle d'apprentissage statistique en fonction des confirmations ou corrections saisies par l'opérateur. Cet ajustement peut également tenir compte des scores de prédiction du modèle. Le modèle d'apprentissage statistique continue donc à apprendre grâce aux corrections saisies par l'opérateur, ce qui améliore sa précision pour les inspections futures. Un tel ajustement peut notamment être réalisé à intervalle régulier ou lorsqu'une dérive trop importante est détectée. De préférence, un tel ajustement peut se faire en dehors des phases d'inspection c'est-à-dire après que le robot a terminé son parcours de la canalisation.

Dans certains modes de réalisation, le système de traitement prend la forme d'une unité centrale. Toutefois, le système de traitement pourrait également être au moins partiellement délocalisé : par exemple la base de données et/ou le modèle d'apprentissage statistique pourraient être hébergé sur un serveur distant, par exemple au sein d'un nuage informatique (« cloud »).

Dans certains modes de réalisation, le système d'identification est embarqué à bord d'un véhicule, par exemple un véhicule utilitaire tel qu'une camionnette. Le système d'identification peut donc être amené au plus près de la canalisation à inspecter afin de réaliser le repérage des défauts, leur classification et la rédaction du rapport sur place, au cours du parcours de la canalisation par le robot.

Le présent exposé concerne également un procédé d'entraînement (non revendiqué) d'un modèle d'apprentissage statistique destiné à l'identification de défaut dans une canalisation, comprenant
la construction d'une base de données principale de photographies comprenant au moins 1 000, de préférence au moins 100 000, de préférence encore au moins 1 000 000, photographies de portions de canalisation présentant au moins un défaut, chaque photographie étant associée avec le type de chacun des défauts visibles sur la photographie, et
l'entraînement du modèle d'apprentissage statistique sur la base de données principale ainsi construite.

Un tel modèle d'apprentissage statistique peut notamment être utilisé dans l'un quelconque des modes de réalisation du système d'identification présenté ci-avant.

Dans certains modes de réalisation, le modèle d'apprentissage statistique est un classifieur multi-labels.

Dans certains modes de réalisation, le modèle d'apprentissage statistique comprend au moins un réseau de neurones, de préférence du type convolutif profond.

Dans certains modes de réalisation, le modèle d'apprentissage statistique comprend un réseau de neurones hybride, assemblant des architectures convolutive et récurrente.

Dans certains modes de réalisation, le modèle d'apprentissage statistique comprend plusieurs classifieurs entraînés sur des bases de données différentes. Il est ainsi possible de combiner les prédictions de ces modèles afin d'améliorer la performance et la robustesse des prédictions.

Dans certains modes de réalisation, le procédé d'apprentissage comprend une étape d'augmentation des données de la base de données principale au cours de laquelle certaines photographies sont synthétisées et/ou dupliquées en appliquant au moins une transformation géométrique et/ou photométrique tout en conservant le type de chacun des défauts visibles sur la photographie. Les transformations appliquées peuvent notamment être des rotations, des recadrages, des modifications du contraste, de la luminosité et/ou de la saturation, pour ne citer que ces exemples. D'une part, une telle augmentation des données permet de démultiplier le nombre de photographies et d'augmenter leur diversité, ce qui permet d'approfondir l'apprentissage du modèle d'apprentissage statistique, notamment en ce qui concerne certains défauts rares qui ne sont que peu représentés dans la base de données initiale. D'autre part, en entraînant le modèle d'apprentissage statistique à reconnaître de tels défauts malgré de telles modifications, on augmente la robustesse du modèle d'apprentissage statistique.

Dans certains modes de réalisation, la base de données principale comprend en outre, pour chaque photographie, une information concernant le matériau de la canalisation. Une telle information complémentaire fournit un paramètre complémentaire au modèle d'apprentissage statistique, permettant de faciliter sa reconnaissance des défauts selon le matériau de la canalisation. En particulier, certains types de défauts apparaissent plus fréquemment dans des canalisations d'un certain matériau.

Dans certains modes de réalisation, la base de données principale comprend en outre, pour chaque photographie, une information concernant la localisation de chaque défaut. Cette information peut notamment comprendre la position horaire du défaut, c'est-à-dire la position angulaire du défaut le long de la circonférence de la canalisation. Une telle information complémentaire fournit un paramètre complémentaire au modèle d'apprentissage statistique, permettant de faciliter sa reconnaissance des défauts en fonction de leur position dans la canalisation. En particulier, certains types de défauts apparaissent plus fréquemment dans certaines zones de la canalisation.

La présente invention concerne également un procédé d'identification de défaut dans une canalisation selon la revendication 11.

Les avantages de ce procédé d'identification de défaut découlent des avantages décrits ci-avant pour le système d'identification de défaut. De plus, ce procédé d'identification de défaut peut présenter tout ou partie des caractérisations additionnelles décrites ci-avant au sujet du système d'identification de défaut.

Dans certains modes de réalisation, le modèle d'apprentissage statistique a été entraîné à l'aide d'un procédé d'entraînement selon l'un quelconque des modes de réalisation précédents.

Les caractéristiques et avantages précités, ainsi que d'autres, apparaîtront à la lecture de la description détaillée qui suit, d'exemples de réalisation du système d'identification et des procédés d'apprentissage et d'identification proposés. Cette description détaillée fait référence aux dessins annexés.

### Brève description des dessins

Les dessins annexés sont schématiques et visent avant tout à illustrer les principes de l'exposé.

Sur ces dessins, d'une figure à l'autre, des éléments (ou parties d'élément) identiques sont repérés par les mêmes signes de référence.
[Fig. 1] La figure 1 est une vue schématique d'un exemple de système d'identification.
[Fig. 2] La figure 2 représente ce système d'identification en cours d'utilisation sur un site d'inspection.

### Description des modes de réalisation

Afin de rendre plus concret l'exposé, un exemple de système d'identification de défaut dans une canalisation ainsi que les procédés d'entraînement et d'identification associés sont décrits en détail ci-après, en référence aux dessins annexés. Il est rappelé que l'invention ne se limite pas à ces exemples.

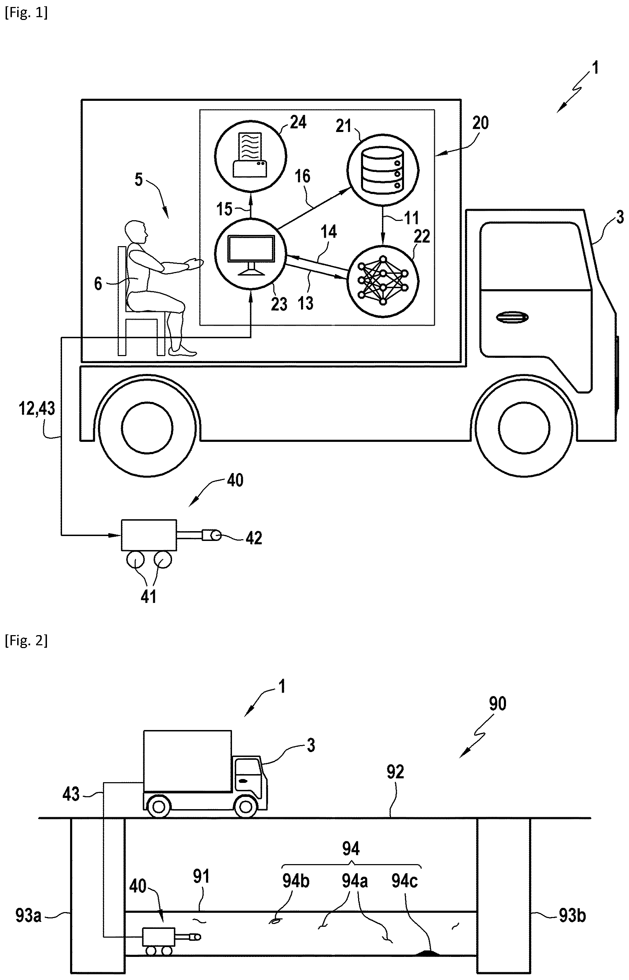

La figure 1 représente un exemple de système d'identification 1. Ce système d'identification comprend un système de traitement, prenant la forme d'une unité centrale 20 hébergée dans un véhicule 3, et un robot 40, pouvant être stocké et transporté dans le véhicule 3. Le véhicule 3 comprend en outre un poste de commande 5 au niveau duquel un opérateur 6 peut s'installer.

L'unité centrale 20 comprend une base de données 21, un modèle d'apprentissage statistique 22, une interface homme-machine 23 et un logiciel d'édition 24. Elle comprend en outre tous les composants habituels utiles à son fonctionnement, et notamment un processeur, une mémoire et un disque de stockage.

La base de données 21 comprend un très grand nombre, supérieur à 1 000 000, de photographies de portions de canalisation prises depuis l'intérieur de la canalisation. Sur toutes ces photographies, au moins un défaut est visible et, sur au moins certaines photographies, plusieurs défauts sont visibles sur la même photographie. Pour chaque photographie de la base de données 21, la liste des défauts visibles sur cette photographie est associée à la photographie en question dans la base de données 21 : plus précisément, pour chaque défaut, le type du défaut selon la norme NF-13508-2 est précisé.

Cette norme codifie les différents défauts qu'il est possible de rencontrer dans une canalisation et les classe en catégories et sous-catégories. A l'échelle des catégories, chaque type de défaut est codifié à l'aide d'un trigramme particulier. Voici quelques exemples de types de défauts avec entre parenthèses le trigramme associé : fissure (BAB) ; dégradation de surface (BAF) ; raccordement défectueux (BAH) ; sol visible (BAO) ; dépôts (BBC) ; dépôts adhérents (BBB) ; rupture/effondrement (BAC) ; branchement pénétrant (BAG) ; déplacement de conduites (BAJ) ; racines (BBA) ; et raccordement (BCA).

La base de données comprend ainsi au moins le trigramme de chaque défaut, correspondant à sa catégorie au sens de la norme NF-13508-2, parfois avec l'indication complémentaire de sa sous-catégorie. De plus, certaines catégories voisines peuvent parfois être regroupées dans une classe commune : par exemple les dépôts et les dépôts adhérents peuvent être regroupés dans une classe portant le label « BBC+BBB ».

En pratique, la base de données 21 est constituée initialement à partir des rapports d'inspection passés : ainsi, le type de tous les défauts enregistrés dans la base de données 21 a été déterminé par un opérateur lors d'une inspection passée ou, au moins, a été vérifié et validé par un opérateur.

De manière complémentaire, la base de données 21 peut associer à chaque défaut une information concernant le matériau de la canalisation dans laquelle ce défaut a été trouvé ainsi qu'une information concernant sa localisation au sein de la canalisation, par exemple sa position horaire le long de la circonférence de la canalisation.

Dans cet exemple, la base de données 21 est disponible localement mais on comprend naturellement qu'elle pourrait tout aussi bien être hébergée dans un nuage informatique.

Le modèle d'apprentissage statistique 22 est un réseau de neurones convolutif profond formant un classifieur multi-labels. Comme cela est symbolisé par la flèche 11, il a été entraîné sur la base de données 21 de manière à être capable de déterminer le type du ou des défauts présents sur une photographie de portion de canalisation. Dans le présent exemple, le modèle d'apprentissage statistique 22 a ainsi été entraîné à distinguer dix types de défauts différents et à calculer, à partir d'une photographie donnée, la probabilité de présence de chacun des dix types de défauts connus par le modèle d'apprentissage statistique 22.

Plus précisément, dans le présent exemple, le classifieur multi-label a été construit à partir d'architectures standards en ré-entraînant un certain nombre de couches avec des images de la base de données 21.

Naturellement, cet entraînement a pu être réalisé en amont, dans un système informatique dédié, distinct de l'unité centrale 20, avant d'inclure le modèle d'apprentissage statistique 22 résultant de cet entraînement dans le système de traitement 20.

Le modèle d'apprentissage statistique 22 est également muni d'une fonction de seuillage, avec un seuil réglable de manière personnalisée pour chaque type de défaut, permettant au modèle d'apprentissage statistique 22 de conclure ou non à la présence de chaque type de défaut en vérifiant si la probabilité de présence de ce type de défaut est supérieure au seuil correspondant.

Dans cet exemple, le modèle d'apprentissage statistique 22 est disponible localement mais on comprend naturellement qu'il pourrait tout aussi bien être hébergé dans un nuage informatique et interrogeable à distance par le système de traitement 20 via une connexion réseau.

L'interface homme-machine 23 comprend un écran et un dispositif de saisie tel qu'un clavier et/ou une souris. Il permet à l'unité centrale 20 de transmettre des informations à l'opérateur 6, principalement sous la forme d'images affichées sur l'écran, et de recueillir des informations saisies par l'opérateur 6 à l'aide du dispositif de saisie. L'interface homme-machine 23 comprend également un dispositif de pilotage du robot 40. Il peut également comprendre d'autres éléments tels qu'un haut-parleur et/ou un microphone.

Le logiciel d'édition 24 est un logiciel permettant en particulier de rédiger des rapports d'inspection. Il peut également comprendre des moyens d'impression et/ou de transmission électronique de document.

Le robot 40 comprend pour sa part un dispositif de locomotion 41 et une caméra orientable 42. Le dispositif de locomotion 41 comprend ici des roues entraînées par un moteur mais il pourrait être d'un tout autre type ; il pourrait par exemple comprendre des chenilles.

La caméra 42 est une caméra RVB (rouge-vert-bleu), c'est-à-dire une caméra standard travaillant dans le domaine de la lumière visible ; elle possède également un objectif standard, qui n'est pas du type fish-eye et présente donc une distorsion négligeable.

Le robot 40 comprend en outre tous les composants habituels utiles à son fonctionnement, et notamment une batterie et un dispositif de communication. En particulier, la communication avec l'unité centrale 20 peut se faire de manière filaire, à l'aide d'un câble 43, ou sans fil, par exemple par ondes wifi ou radio.

Un exemple de procédé d'identification de défaut utilisant un tel système d'identification de défaut 1 va maintenant être décrit en référence aux figures 1 et 2. En particulier, la figure 2 illustre le système d'identification 1 en cours d'utilisation sur un site d'inspection 90. La cible de cette inspection est une canalisation 91 d'eaux usées enterrée sous la chaussée 92. La canalisation 91, possédant un diamètre nominal typiquement compris entre 200 et 500 mm, s'étend entre un premier regard 93a et un deuxième regard 93b. Cette canalisation présente plusieurs défauts 94, par exemple des fissures 94a, une dégradation de surface 94b ou encore un dépôt 94c.

Lors de l'inspection, le véhicule 3 hébergeant le système d'identification 1 est garé à proximité du premier regard 93a et le robot 40 est introduit dans la canalisation 91 par le premier regard 93a. Un opérateur 6 s'installe alors au poste de commande 5 et commence à piloter le robot 40 grâce à l'interface homme-machine 23 : l'opérateur 6 est ainsi capable de contrôler le dispositif de locomotion 41 et la caméra 42 du robot 40 et reçoit sur un écran le flux vidéo de la caméra 42. Ce contrôle-commande est représenté par la flèche 12 qui correspond au câble 43.

L'opérateur 6 fait alors progressivement avancer le robot 40 dans la canalisation 91 et surveille le flux vidéo de la caméra 42 à la recherche de défauts. Lorsqu'il pense avoir repéré un défaut 94, l'opérateur 6 peut orienter la caméra afin de mieux visualiser le défaut 94 : l'opérateur 6 prend alors une photographie du défaut 94. Lorsque deux défauts 94 distincts sont proches l'un de l'autre, l'opérateur 6 peut prendre une photographie commune pour les deux défauts 94.

Comme cela est symbolisé par la flèche 13, cette photographie est alors transmise au modèle d'apprentissage statistique 22. Le modèle d'apprentissage statistique 22 détermine alors, sur la base de cette photographie, la probabilité de présence de chaque type de défaut connu par le modèle d'apprentissage statistique 22 sur la photographie en question. Le modèle d'apprentissage statistique 22 applique alors sa fonction de seuillage afin d'établir une proposition de classification pour chacun des défauts 94 reconnus par le modèle d'apprentissage statistique 22.

Comme cela est symbolisé par la flèche 14, cette proposition de classification est transmise à l'opérateur 6 par l'intermédiaire de l'interface homme-machine 23. L'opérateur 6 peut alors vérifier cette proposition et, selon le cas, la confirmer ou la corriger, aboutissant ainsi à une classification définitive pour chacun des défauts 94 de la photographie en question.

Comme cela est symbolisé par la flèche 15, la photographie en question ainsi que la classification définitive des défauts 94 présents sur cette photographie sont transmises au logiciel d'édition 24 afin de rédiger au fur et à mesure, de manière semi-automatique, un rapport d'inspection, l'opérateur 6 pouvant compléter et/ou corriger ce dernier à tout moment à l'aide de l'interface homme-machine 23.

De plus, comme cela est symbolisé par la flèche 16, la photographie en question est ajoutée à la base de données 21, en association avec la classification définitive des défauts 94 présents sur cette photographie. A cette occasion, si la proposition de classification établie par le modèle d'apprentissage statistique 22 s'est avérée inexacte et a donc été corrigée par l'opérateur 6, l'unité centrale 20 enregistre cette information dans une mémoire de manière à pouvoir évaluer le modèle d'apprentissage statistique et estimer sa dérive. A intervalle régulier, par exemple une fois tous les deux mois, les paramètres du modèle d'apprentissage statistique 22 peuvent être ajustés afin de corriger cette dérive.

L'opérateur 6 peut alors procéder à la recherche d'un nouveau défaut 94 de la canalisation 91. Les étapes du procédé d'identification se répètent ainsi jusqu'à ce que le robot 40 ait terminé de parcourir la canalisation 91. L'opérateur 6 peut alors finaliser le rapport d'inspection, récupérer le robot 40 et ranger à nouveau ce dernier dans le véhicule 3.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé de rendre plus concret l'exposé, un exemple de dispositif est décrit en détail ci-après, en référence aux dessins annexés. Il est rappelé que l'invention ne se limite pas à cet exemple.

## Revendications

1. Système d'identification de défaut dans une canalisation, comprenant
un robot (40), muni d'un dispositif de locomotion (41) et d'une caméra (42), configuré pour être piloté par un opérateur, parcourir la canalisation (91) et prendre des photographies de portions de la canalisation (91) suspectées de présenter un ou plusieurs défauts (94) à partir d'un déclenchement manuel de l'opérateur ayant repéré le ou les défauts,
un système de traitement (20), muni d'un modèle d'apprentissage statistique (22) configuré pour déterminer sur le moment, c'est-à-dire au fur et à mesure du repérage par l'opérateur d'un défaut sur une portion de la canalisation et d'une prise de photographie de ladite portion de canalisation, sur la base d'une telle photographie appelée photographie en cours, le type de chaque défaut (94) reconnu sur la photographie en cours parmi une liste préétablie d'au moins 10 types de défauts, et
une interface homme-machine (23) comportant au moins un écran, le système de traitement (20) étant configuré pour afficher sur l'écran la photographie en cours accompagnée d'une proposition de classification pour chacun des défauts (94) reconnaissables sur la photographie,
dans lequel le système de traitement (20) est configuré pour recevoir une confirmation ou une correction de la proposition, saisie par un opérateur (6) par l'intermédiaire de l'interface homme-machine (23), et à enregistrer la classification définitive pour chacun des défauts (94) de la photographie.

2. Système d'identification selon la revendication 1, dans lequel le robot (40) est configuré pour parcourir une canalisation d'eaux usées non visitable, possédant un diamètre nominal inférieur à 1600 mm, de préférence compris entre 200 et 500 mm.

3. Système d'identification selon la revendication 1 ou 2, dans lequel le système de traitement est configuré pour recevoir en entrée des photographies comprenant chacune au moins un défaut (94), au moins certaines photographies comprenant plusieurs défauts (94).

4. Système d'identification selon l'une quelconque des revendications 1 à 3, dans lequel le robot (40) est configuré pour être piloté par un opérateur (6),
dans lequel la caméra (42) du robot (40) est orientable par l'opérateur (6), et dans lequel le robot (40) est configuré de sorte que les photographies soient déclenchées manuellement par l'opérateur (6).

5. Système d'identification selon l'une quelconque des revendications 1 à 4, dans lequel le système de traitement (20) est configuré pour recevoir sans délai les photographies prises par le robot (40) et les transmettre sans délai au modèle d'apprentissage statistique (22) pour détermination des types de défauts.

6. Système d'identification selon l'une quelconque des revendications 1 à 5, comprenant en outre une base de données (21) de photographies comprenant au moins 1 000, de préférence au moins 100 000, de préférence encore au moins 1 000 000, photographies de portions de canalisation présentant au moins un défaut, chaque photographie étant associée avec le type de chacun des défauts visibles sur la photographie, et dans lequel le modèle d'apprentissage statistique (22) a été entraîné sur ladite base de données.

7. Système d'identification selon l'une quelconque des revendications 1 à 6, dans lequel le modèle d'apprentissage statistique (22) est un classifieur multi-labels comprenant au moins un réseau de neurones, de préférence du type convolutif profond.

8. Système d'identification selon l'une quelconque des revendications 1 à 7, dans lequel le modèle d'apprentissage (22) est configuré pour déterminer une probabilité de présence pour chacun des types de défauts de la liste préétablie,
dans lequel le modèle d'apprentissage (22) est configuré pour déterminer qu'un type de défaut particulier est présent s'il détermine que la probabilité de présence de ce type de défaut est supérieure à un seuil prédéterminé, chaque type de défaut étant associé à un seuil personnalisé.

9. Système d'identification selon l'une quelconque des revendications 1 à 8, dans lequel le système de traitement (20) est configuré pour afficher en outre en surimpression sur la photographie la position des défauts (94) reconnus.

10. Système d'identification selon l'une quelconque des revendications 1 à 9, dans lequel le système de traitement (20) est configuré pour ajouter chaque nouvelle photographie à la base de données (21), en association avec la classification définitive des défauts (94), et dans lequel le système de traitement (20) est configuré pour évaluer le modèle d'apprentissage statistique (22) et/ou ajuster le paramétrage du modèle d'apprentissage statistique (22) en fonction des confirmations ou corrections saisies par l'opérateur (6).

11. Procédé d'identification de défaut dans une canalisation, comprenant les étapes suivantes :
fourniture d'un modèle d'apprentissage statistique (22), configuré pour déterminer, sur la base d'une photographie d'une portion de canalisation, le type de chaque défaut reconnaissable sur la photographie parmi une liste préétablie d'au moins 10 types de défauts,
parcours de la canalisation (91) à l'aide d'un robot (40) muni d'un dispositif de locomotion (41) et d'une caméra (42) et qui est piloté par un opérateur,
prise de photographies de portions de la canalisation (91) suspectées de présenter un ou plusieurs défauts (94) à partir d'un déclenchement manuel de l'opérateur ayant repéré le ou les défauts,
transmission de chaque photographie au modèle d'apprentissage statistique (22) et détermination par ce dernier du type de chaque défaut (94) reconnaissable sur chaque photographie, la détermination de défaut étant faite sur le moment, c'est-à-dire au fur et à mesure du repérage par l'opérateur d'un défaut sur une portion de la canalisation et d'une prise de photographie de ladite portion de canalisation, ladite photographie étant appelée photographie en cours,
affichage sur un écran d'une interface homme-machine (23) d'une proposition de classification pour chacun des défauts (94) reconnaissables sur la photographie en cours,
saisie par un opérateur, par l'intermédiaire de l'interface homme-machine (23), d'une confirmation ou d'une correction de la proposition, et
enregistrement de la classification définitive pour chacun des défauts (94) de la photographie.

## Patentansprüche

1. System zur Identifizierung von Defekten in einer Rohrleitung, umfassend
einen Roboter (40), versehen mit einer Fortbewegungsvorrichtung (41) und einer Kamera (42), eingerichtet, um von einem Bediener gesteuert zu werden, die Rohrleitung (91) zu durchfahren und Fotografien von Abschnitten der Rohrleitung (91) aufzunehmen, bei denen der Verdacht besteht, dass sie einen oder mehrere Defekte (94) aufweisen, ausgehend von einer manuellen Auslösung durch den Bediener, der den oder die Defekte erkannt hat,
ein Verarbeitungssystem (20), versehen mit einem statistischen Lernmodell (22), eingerichtet, um zum jeweiligen Zeitpunkt, das heißt im Verlauf der Erkennung eines Defekts auf einem Abschnitt der Rohrleitung durch den Bediener und der Aufnahme einer Fotografie des genannten Rohrleitungsabschnitts, auf der Grundlage einer solchen Fotografie, bezeichnet als laufende Fotografie, den Typ jedes auf der laufenden Fotografie erkannten Defekts (94) unter einer vorab festgelegten Liste von mindestens 10 Defekttypen zu bestimmen, und
eine Mensch-Maschine-Schnittstelle (23), umfassend mindestens einen Bildschirm, wobei das Verarbeitungssystem (20) eingerichtet ist, auf dem Bildschirm die laufende Fotografie zusammen mit einem Klassifizierungsvorschlag für jeden auf der Fotografie erkennbaren Defekt (94) anzuzeigen,
wobei das Verarbeitungssystem (20) eingerichtet ist, eine Bestätigung oder eine Korrektur des Vorschlags zu empfangen, eingegeben durch einen Bediener (6) über die Mensch-Maschine-Schnittstelle (23), und die endgültige Klassifizierung für jeden der Defekte (94) der Fotografie zu speichern.

2. System zur Identifizierung nach Anspruch 1, wobei der Roboter (40) eingerichtet ist, eine nicht begehbare Abwasserleitung zu durchfahren, die einen Innen-Nenndurchmesser von weniger als 1600 mm aufweist, vorzugsweise zwischen 200 und 500 mm liegt.

3. System zur Identifizierung nach Anspruch 1 oder 2, wobei das Verarbeitungssystem eingerichtet ist, als Eingang Fotografien zu empfangen, die jeweils mindestens einen Defekt (94) umfassen, wobei zumindest einige Fotografien mehrere Defekte (94) umfassen.

4. System zur Identifizierung nach einem der Ansprüche 1 bis 3, wobei der Roboter (40) eingerichtet ist, von einem Bediener (6) gesteuert zu werden,
wobei die Kamera (42) des Roboters (40) durch den Bediener (6) ausrichtbar ist, und
wobei der Roboter (40) so eingerichtet ist, dass die Fotografien manuell durch den Bediener (6) ausgelöst werden.

5. System zur Identifizierung nach einem der Ansprüche 1 bis 4, wobei das Verarbeitungssystem (20) eingerichtet ist, die durch den Roboter (40) aufgenommenen Fotografien unverzüglich zu empfangen und sie unverzüglich an das statistische Lernmodell (22) zur Bestimmung der Defekttypen zu übermitteln.

6. System zur Identifizierung nach einem der Ansprüche 1 bis 5, ferner umfassend eine Datenbank (21) von Fotografien, die mindestens 1 000, vorzugsweise mindestens 100 000, noch bevorzugter mindestens 1 000 000 Fotografien von Abschnitten einer Rohrleitung umfassen, die mindestens einen Defekt aufweisen, wobei jede Fotografie mit dem Typ jedes auf der Fotografie sichtbaren Defekts verknüpft ist, und wobei das statistische Lernmodell (22) auf der genannten Datenbank trainiert worden ist.

7. System zur Identifizierung nach einem der Ansprüche 1 bis 6, wobei das statistische Lernmodell (22) ein Multi-Label-Klassifikator ist, der mindestens ein neuronales Netz umfasst, vorzugsweise vom tiefen konvolutionellen Typ.

8. System zur Identifizierung nach einem der Ansprüche 1 bis 7, wobei das Lernmodell (22) eingerichtet ist, eine Anwesenheitswahrscheinlichkeit für jeden der Defekttypen der vorab festgelegten Liste zu bestimmen,
wobei das Lernmodell (22) eingerichtet ist zu bestimmen, dass ein bestimmter Defekttyp vorhanden ist, wenn es bestimmt, dass die Anwesenheitswahrscheinlichkeit dieses Defekttyps über einem vorbestimmten Schwellenwert liegt, wobei jeder Defekttyp mit einem personalisierten Schwellenwert verknüpft ist.

9. System zur Identifizierung nach einem der Ansprüche 1 bis 8, wobei das Verarbeitungssystem (20) eingerichtet ist, ferner in Überlagerung auf der Fotografie die Position der erkannten Defekte (94) anzuzeigen.

10. System zur Identifizierung nach einem der Ansprüche 1 bis 9, wobei das Verarbeitungssystem (20) eingerichtet ist, jede neue Fotografie der Datenbank (21) hinzuzufügen, in Verknüpfung mit der endgültigen Klassifizierung der Defekte (94), und wobei das Verarbeitungssystem (20) eingerichtet ist, das statistische Lernmodell (22) zu bewerten und/oder die Parametrierung des statistischen Lernmodells (22) in Abhängigkeit von den durch den Bediener (6) eingegebenen Bestätigungen oder Korrekturen anzupassen.

11. Verfahren zur Identifizierung eines Defekts in einer Rohrleitung, umfassend die folgenden Schritte:
Bereitstellen eines statistischen Lernmodells (22), eingerichtet, um auf der Grundlage einer Fotografie eines Abschnitts einer Rohrleitung den Typ jedes auf der Fotografie erkennbaren Defekts unter einer vorab festgelegten Liste von mindestens 10 Defekttypen zu bestimmen,
Durchfahren der Rohrleitung (91) mithilfe eines Roboters (40), versehen mit einer Fortbewegungsvorrichtung (41) und einer Kamera (42) und der durch einen Bediener gesteuert wird,
Aufnehmen von Fotografien von Abschnitten der Rohrleitung (91), bei denen der Verdacht besteht, dass sie einen oder mehrere Defekte (94) aufweisen, ausgehend von einer manuellen Auslösung durch den Bediener, der den oder die Defekte erkannt hat,
Übermitteln jeder Fotografie an das statistische Lernmodell (22) und Bestimmen durch dieses des Typs jedes auf jeder Fotografie erkennbaren Defekts (94), wobei die Bestimmung des Defekttyps zum jeweiligen Zeitpunkt erfolgt, das heißt im Verlauf der Erkennung eines Defekts auf einem Abschnitt der Rohrleitung durch den Bediener und der Aufnahme einer Fotografie des genannten Rohrleitungsabschnitts, wobei die genannte Fotografie als laufende Fotografie bezeichnet wird,
Anzeigen auf einem Bildschirm einer Mensch-Maschine-Schnittstelle (23) eines Klassifizierungsvorschlags für jeden der auf der laufenden Fotografie erkennbaren Defekte (94),
Eingeben durch einen Bediener über die Mensch-Maschine-Schnittstelle (23), einer Bestätigung oder einer Korrektur des Vorschlags, und
Speichern der endgültigen Klassifizierung für jeden der Defekte (94) der Fotografie.

## Claims

1. A system for identifying a fault in a pipeline, comprising:
a robot (40) equipped with a locomotion device (41) and a camera (42), configured so as to be controlled by an operator, to travel along the pipeline (91) and to take photographs of portions of the pipeline (91) suspected of having one or more faults (94) on the basis of a manual triggering by the operator having located the fault(s),
a processing system (20), equipped with a statistical learning model (22) configured to determine at the time, i.e. as and when the operator locates a fault on a portion of the pipeline and a photograph of said portion of pipeline is taken, on the basis of such a photograph called the current photograph, the type of each fault (94) recognised on the current photograph from a pre-established list of at least 10 fault types, and
a human-machine interface (23) comprising at least one screen, the processing system (20) being configured to display the current photograph on the screen accompanied by a classification proposal for each of the faults (94) recognisable in the photograph,
wherein the processing system (20) is configured to receive a confirmation or correction of the proposal, entered by an operator (6) via the human-machine interface (23), and to record the final classification for each of the faults (94) in the photograph.

2. The identification system according to claim 1, wherein the robot (40) is configured to travel along an inaccessible wastewater pipeline having a nominal diameter of less than 1600 mm, preferably between 200 and 500 mm.

3. The identification system according to claim 1 or 2, wherein the processing system is configured to receive, as input, photographs each comprising at least one fault (94), at least some photographs comprising a plurality of faults (94).

4. The identification system according to any one of claims 1 to 3, wherein the robot (40) is configured to be controlled by an operator (6),
wherein the camera (42) of the robot (40) can be oriented by the operator (6), and wherein the robot (40) is configured so that the photographs are triggered manually by the operator (6).

5. The identification system according to any one of claims 1 to 4, wherein the processing system (20) is configured to receive, without delay, the photographs taken by the robot (40) and to transmit them, without delay, to the statistical learning model (22) for determination of the types of faults.

6. The identification system according to any one of claims 1 to 5, further comprising a database (21) of photographs comprising at least 1000, preferably at least 100,000, more preferably at least 1,000,000, photographs of pipeline portions having at least one fault, each photograph being associated with the type of each of the faults visible in the photograph, and wherein the statistical learning model (22) has been trained on said database.

7. The identification system according to any one of claims 1 to 6, wherein the statistical learning model (22) is a multi-label classifier comprising at least one neural network, preferably of the deep convolutional type.

8. The identification system according to any one of claims 1 to 7, wherein the learning model (22) is configured to determine a probability of presence for each of the fault types in the pre-established list,
wherein the learning model (22) is configured to determine that a particular fault type is present if it determines that the probability of presence of that fault type is greater than a predetermined threshold, each fault type being associated with an individualised threshold.

9. The identification system according to any one of claims 1 to 8, wherein the processing system (20) is configured to additionally display, superimposed on the photograph, the position of the recognised faults (94).

10. The identification system according to any one of claims 1 to 9, wherein the processing system (20) is configured to add each new photograph to the database (21), in association with the final classification of faults (94), and wherein the processing system (20) is configured to evaluate the statistical learning model (22) and/or adjust the parameter setting of the statistical learning model (22) as a function of the confirmations or corrections entered by the operator (6).

11. A method of identifying a fault in a pipeline, comprising the following steps:
providing a statistical learning model (22), configured to determine, on the basis of a photograph of a portion of pipeline, the type of each fault recognisable in the photograph from a pre-established list of at least 10 fault types;
travelling along the pipeline (91) with the aid of a robot (40) equipped with a locomotion device (41) and a camera (42) and which is controlled by an operator,
taking photographs of portions of the pipeline (91) suspected of having one or more faults (94) on the basis of manual triggering by the operator having located the fault(s),
transmitting each photograph to the statistical learning model (22) and determination by the latter of the type of each fault (94) recognisable in each photograph, the fault being determined at the time, i.e. as and when the operator locates a fault in a portion of the pipeline and a photograph of said portion of pipeline is taken, said photograph being referred to as the current photograph,
displaying on a screen of a human-machine interface (23) a classification proposal for each of the faults (94) recognisable in the current photograph,
entering by an operator, via the human-machine interface (23), a confirmation or correction of the proposal; and recording the final classification for each of the faults (94) in the photograph.
